# EUROPÄISCHE PATENTSCHRIFT

(11) **EP 1 389 545 B1**
(45) Veröffentlichungstag und Bekanntmachung des Hinweises auf die Patenterteilung: **11.03.2009**
(21) Anmeldenummer: 03018148.1
(22) Anmeldetag: 08.08.2003
(51) Int. Cl.: B60J 7/02

(54) **Gleitbackenführung für öffnungsfähige Fahrzeugdächer oder Fahrzeugklappen**
Guiding shoe for openable vehicle roofs or covers
Patin de guidage pour toit ou pannenau ouvrant de véhicule

(30) Priorität: 13.08.2002 DE 10237092
(43) Veröffentlichungstag der Anmeldung: 18.02.2004
(73) Patentinhaber: Webasto AG, 82131 Stockdorf (DE)
(72) Erfinder: Stjepan, Radmanic, 82291 Mammendorf (DE)
(74) Vertreter: Konnerth, Dieter Hans

(56) Entgegenhaltungen:
- EP-A- 0 403 738
- DE-A- 10 003 377
- DE-C- 4 336 222
- US-A- 4 114 945

## Beschreibung

Die Erfindung betrifft eine Gleitbackenführung für öffnungsfähige Fahrzeugdächer, mit einer einen Führungskanal aufweisenden Führungsbahn und einem in dem Führungskanal entlang der Führungsbahn verschiebbar geführten Gleitbacken, der einen gummielastischen Gleitbackenkörper und eine auf den Gleitbackenkörper aufgesetzte Gleitkappe aufweist.

Gleitbackenführungen dieser Art sind unter anderem aus DE 43 36 222 C1 und EP 0 403 738 A2 bekannt. Bei solchen bekannten Gleitbackenführungen ist der gummielastische Gleitbackenkörper mit einer Längsnut versehen, in die ein im Querschnitt rechteckiger Fuß eines Gleitbackenträgers eingesteckt ist. Gleitbackenführungen werden nicht nur für geradlinige Führungsbahnen eingesetzt, sondern häufig auch für solche mit Kurvenbereichen, wie dies beispielsweise aus DE 100 33 887 C1 bekannt ist. Die bekannten Gleitbacken sind aber nur bedingt kurvengängig. Im Kurvenbereich kommt es zu relativ hohen Flächenpressungen und starken Verformungen der Gleitbacke.
Insbesondere bei großem Gewicht des zu verstellenden Fahrzeugteils, zum Beispiel Deckels, ist dies mit hohem Verschleiß verbunden. Ein solcher Verschleiß führt seinerseits zu ungewolltem Spiel des Gleiters in seinem Führungskanal und damit zum Klappern des Systems bei Unebenheiten der Fahrbahn und dadurch verursachten Stößen auf das Fahrzeug.

Es ist Aufgabe der vorliegenden Erfindung, eine Gleitbackenführung zu schaffen, die über die Lebensdauer des Systems verschleißarm ist und die besonders wirkungsvoll für Klapperfreiheit sorgt.

Diese Aufgabe wird erfindungsgemäß dadurch gelöst, dass bei einer Gleitbackenführung der eingangs genannten Art in den gummielastischen Gleitbackenkörper ein Trägerteil eingesetzt ist, das eine höhere Festigkeit und Steifigkeit als der Gleitbackenkörper hat und das seinerseits auf einem Tragbolzen drehbar abgestützt ist.

Die Gleitbackenführung nach der Erfindung zeichnet sich durch verbesserte Kurvengängigkeit bei vermindertem Verschleiß aus. Sie vermeidet oder reduziert mindestens unerwünschte Klappergeräusche.

Bevorzugte Ausgestaltungen der Erfindung ergeben sich aus den Unteransprüchen.

Das Trägerteil kann aus hochfestem Kunststoff oder aus Metall bestehen. Vorzugsweise ist der Tragbolzen aus Metall gefertigt und mit das Trägerteil bildendem Kunststoff umspritzt, so dass das Trägerteil von vornherein auf dem Tragbolzen spielfrei drehbar ist. Gegebenenfalls kann das Trägerteil aber auch separat gespritzt und auf den Tragbolzen aufgeclipst sein.

Das Trägerteil kann für eine hochbelastbare Abstützung des Gleitbackenkörpers und der Gleitkappe eine den Tragbolzen umgreifende Nabe und zwei von gegenüberliegenden Seiten der Nabe im wesentlichen radial abstehende Flügel aufweisen.

Der Gleitbackenkörper ist vorzugsweise im wesentlichen kappenförmig mit einer Umfangswand und einer an die eine Seite der Umfangswand anschließenden Stirnwand ausgebildet und im Bereich seiner Umfangswand geschlitzt, wobei sich die Schlitze zweckmäßig in Längsrichtung des Gleitbackens und/oder in Querrichtung des Gleitbackens erstrecken.

Der Gleitbacken hat zweckmäßig im wesentlichen Quaderform und ist sowohl in Längsrichtung als auch in Querrichtung spiegelsymmetrisch ausgebildet.

Die Gleitkappe ist vorzugsweise auf das Trägerteil aufgeclipst und im Interesse hoher Stabilität mit dem Trägerteil in der Längsrichtung des Gleitbackens im wesentlichen spielfrei verbunden. Sie kann für letzteres insbesondere eine Umfangswand aufweisen, an deren Innenseite das Trägerteil im Bereich der Schmalseiten des Gleitbackens anliegt, da in Gleitbacken-Längsrichtung kein Toleranzausgleich notwendig ist.

Vorzugsweise ist die Gleitkappe aber für einen besonders wirkungsvollen Toleranzausgleich mit Bezug auf das Trägerteil sowohl in der Querrichtung des Gleitbackens als auch in Drehrichtung um die Achse des Tragbolzens elastisch verstellbar. Dabei weist die Gleitkappe zweckmäßig eine Umfangswand auf, von deren Innenseite das Trägerteil im Bereich der Längsseiten des Gleitbackens in Abstand liegt.

Der gummielastische Gleitbackenkörper füllt vorteilhaft im wesentlichen den gesamten Raum zwischen dem Trägerteil und der Gleitkappe aus.

In die mit den Wänden des Führungskanals in Gleiteingriff kommenden Gleitflächen der Gleitkappe sind vorzugsweise - wie an sich aus DE 4336222 C1 bekannt - Abstreiflippen integriert, die schräg zur Verschieberichtung verlaufen und Schmutzpartikel beseitigen, die im Betrieb in die Gleitbackenführung eingedrungen sein können.

In weiterer Ausgestaltung der Erfindung ist der Führungskanal im Bereich von Kurven der Führungsbahn breiter als im Bereich geradliniger Führungsbahnstrecken ausgebildet.

Dadurch wird die Kurvengängigkeit des Gleitbackens in gebogenen Führungsbahnen zusätzlich wesentlich verbessert. Dabei ist die Aufweitung des Führungskanals in Kurvenbereichen der Führungsbahn vorzugsweise so bemessen, dass sich die Gleitbacke an die Führungskanalwände auch beim Durchlaufen solcher Kurvenbereiche im wesentlichen verformungsfrei anschmiegt. Im folgenden wird die Erfindung anhand der beigefügten Zeichnungen beispielhaft näher erläutert. Es zeigen:
Fig. 1 eine Explosionsdarstellung einer erfindungsgemäßen Gleitbackenführung,
Fig. 2 eine Seitenansicht der Gleitbacke der Fig.1 und der die Gleitbacke tragenden Abstützung,
Fig. 3 in größerem Maßstab eine Detailansicht des eingekreisten Teils der Fig. 2,
Fig. 4 einen Schnitt entlang der Linie A-A der Fig. 3,
Fig. 5 einen Schnitt entlang der Linie B-B der Fig. 3,
Fig. 6 eine perspektivische Ansicht der Gleitbacke in noch größerem Maßstab,
Fig. 7 eine vergrößerte Seitenansicht der Gleitbackenführung gemäß Fig. 1,
Fig. 8 eine Teilansicht eines mit der Gleitbackenführung gemäß den Figuren 1 bis 7 ausgestatteten öffnungsfähigen Fahrzeugdaches mit in Schließstellung befindlichem Deckel, und
Fig. 9 eine Teilansicht gemäß Fig. 8 bei angehobenem Deckel.

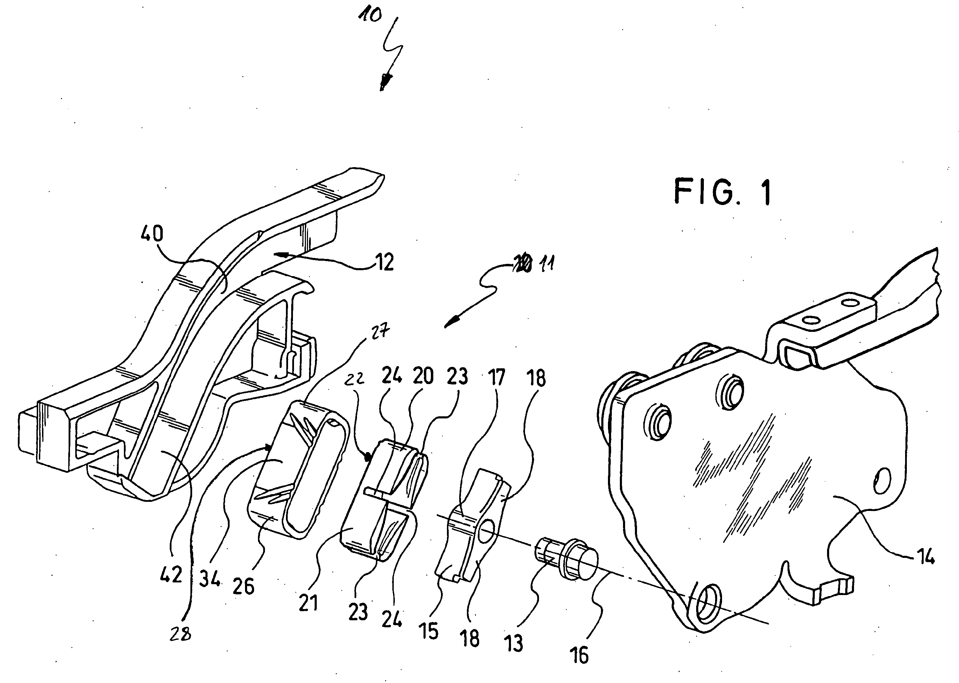

Die Figuren 1, 8 und 9 zeigen ein Ausführungsbeispiel der vorliegenden, insgesamt mit 10 bezeichneten Gleitbackenführung bei Anwendung für den vorderen Hub- und Verschiebemechanismus eines aus DE 100 33 887 C1 bekannten Fahrzeugdaches. Es versteht sich jedoch, dass die Gleitbackenführung auch für jede beliebige andere Mechanik zum Betätigen eines öffnungsfähigen Fahrzeugdaches oder für eine Mechanik zum Betätigen einer Fahrzeugklappe mit Vorteil eingesetzt werden kann.

Zu der Gleitbackenführung 10 gehören ein mehrteiliger, im wesentlichen quaderförmiger Gleitbacken 11 und eine Führungsbahn 12. Der Gleitbacken 11 ist bezüglich sowohl einer Längsachse als auch einer Querachse im wesentlichen spiegelsymmetrisch ausgebildet, und er weist einen vorzugsweise metallischen Tragbolzen 13 auf. Der Tragbolzen 13 ist an einer im gezeigten Ausführungsbeispiel gleichfalls metallischen Abstützung 14 befestigt, zum Beispiel angenietet. Auf dem Tragbolzen 13 ist ein Trägerteil 15 um die Achse 16 des Tragbolzen 13 drehbar abgestützt. Das Trägerteil 15 kann aus einem Kunststoff mit hoher Festigkeit bestehen und beispielsweise unmittelbar durch Umspritzen des Tragbolzens 13 gefertigt sein. Dies hat den Vorteil, dass das angespritzte Kunststoff-Trägerteil auf dem Tragbolzen 13 spielfrei drehbar und somit ohne weiteren Aufwand klapperfrei ist. Das Kunststoff-Trägerteil kann aber auch separat gespritzt und anschließend auf den Tragbolzen 13 geclipst werden. Insbesondere wenn die Gleitbackenführung 10 für sehr hohe Beanspruchungen bestimmt ist, kann ferner das Trägerteil 15 auch aus Metall gefertigt und auf den Tragbolzen 13 aufgesteckt sein. Das Trägerteil 15 weist eine den Tragbolzen 13 umgreifende Nabe 17 und zwei Flügel 18 auf, die von einander diametral gegenüberliegenden Seiten der Nabe 17 im wesentlichen radial nach außen abstehen.

Auf das Trägerteil 15 ist ein gummielastischer, zweckmäßig aus Gummi gefertigter Gleitbackenkörper 20 aufgesteckt. Der Gleitbackenkörper 20 hat geringere Festigkeit und Steifigkeit als das Trägerteil 15, und er sorgt dadurch für Toleranzausgleich und Dämpfung. Der insgesamt im wesentlichen kappenförmige Gleitbackenkörper 20 weist eine Umfangswand 21 und eine an die eine Seite der Umfangswand 21 anschließende Stirnwand 22 auf. Die Innenseite der Stirnwand 22 liegt an der von der Abstützung 14 abgewendeten Seite der Flügel 18 an. Die Umfangswand 21 ist in Längsrichtung der Gleitbacke bei 23 und in Querrichtung der Gleitbacke bei 24 geschlitzt.

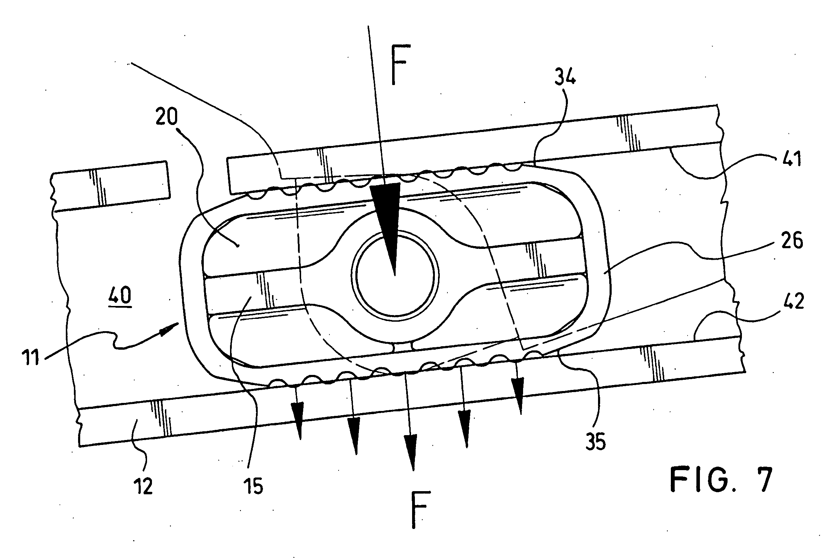

Auf den Gleitbackenkörper 20 ist schließlich eine Gleitkappe 26 mit einer Umfangswand 27 und einer an die eine Seite der Umfangswand 27 anschließenden Stirnwand 28 aufgesteckt. Im Bereich der Schmalseiten des Gleitbackens 11 steht die Innenseite der Umfangswand 27 der Gleitkappe 26 mit den Schmalseiten des Trägerteils 15 in Berührung, während die Innenseite der Umfangswand 27 im Bereich der Längsseiten des Gleitbackens in Abstand von den Längsseiten des Trägerteils 15 liegt. Der gummielastische Gleitbackenkörper 20 füllt dabei im wesentlichen den gesamten Raum zwischen dem Trägerteil 15 und der Gleitkappe 26 aus. Die Flügel 18 können entsprechend den Figuren 7 bis 9 über ihre volle Länge eine im wesentlichen konstante Dicke aufweisen oder sich, wie in den Figuren 1 bis 6 dargestellt, radial nach außen verjüngen. Dementsprechend hat die Umfangswand 21 des Gleitbackenkörpers 20 im Bereich der Flügel 18 eine im wesentlichen konstante Dicke (Figuren 7 bis 9), oder diese Dicke nimmt in Richtung auf die von der Nabe 17 abliegenden Flügelenden zu (Figuren 1 bis 6). Im eine wie im anderen Fall sorgt die erläuterte Anordnung dafür, dass sich unter Ausnutzung der elastischen Eigenschaften des Gleitbackenkörpers 20 die Gleitkappe 26 mit Bezug auf das Trägerteil 15 sowohl in der Querrichtung des Gleitbackens 11 als auch in Drehrichtung um die Achse 16 des Tragbolzens 13 begrenzt verlagern kann. Außerdem kann der Gleitbacken 11 als Ganzes in Querrichtung begrenzt zusammengedrückt werden, wenn die Gleitkappe 26 eine begrenzte Elastizität aufweist. Dagegen stehen die Gleitkappe 26 und das Trägerteil 15 in der Längsrichtung des Gleitbackens 11 im wesentlichen spielfrei miteinander in Eingriff.

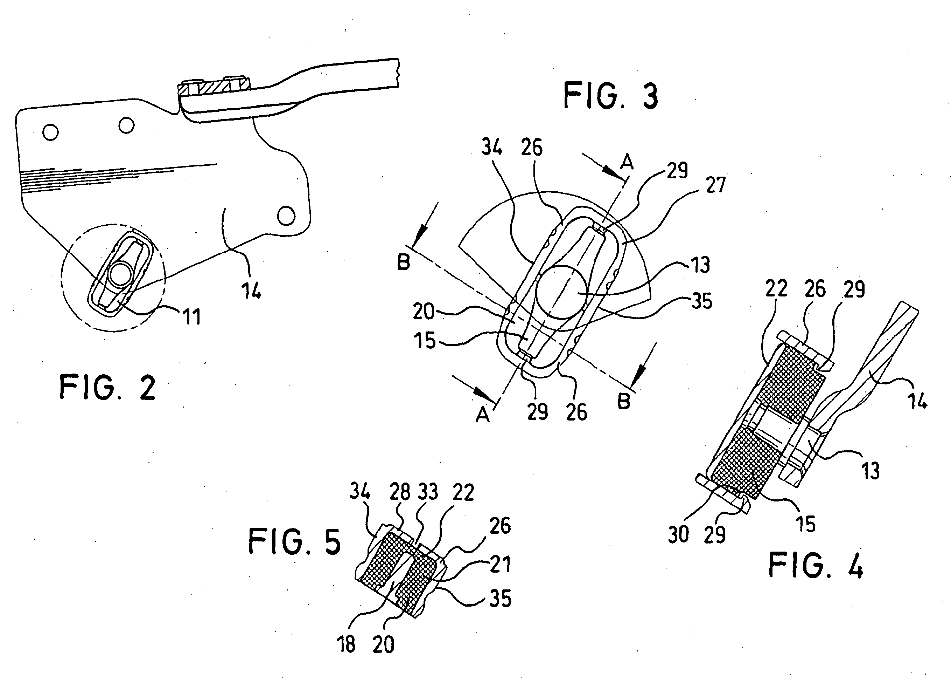

Die Innenseite der Stirnwand 28 liegt an der Außenseite der Stirnwand 22 des Gleitbackenkörpers 20 an. An der der Abstützung 14 zugewendeten Seite der Umfangswand 27 befinden sich im Bereich der Schmalseiten der Gleitbacke 11 Rastnasen 29 (Figur 4). Die Rastnasen 29 legen sich gegen eine Schulter 30 an, die an der der Abstützung 14 zugewendeten Seite des Trägerteils 15 ausgebildet ist. Auf diese Weise werden das Trägerteil 15, der Gleitbackenkörper 20 und die Gleitkappe 26 sicher zusammengehalten. Die Stirnwand 28 der Gleitkappe 26 weist einen Längsschlitz 33 auf (Figur 5).

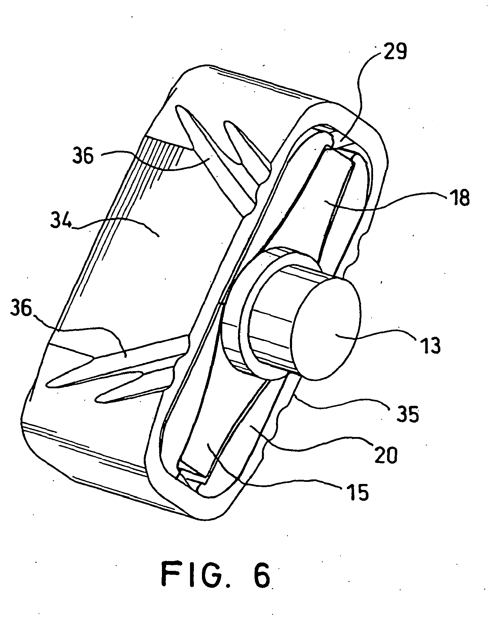

Die Gleitkappe 26 ist vorzugsweise aus einem Kunststoff mit guten Gleiteigenschaften und günstigem Geräuschverhalten, beispielsweise aus Polyethylen (PE) oder Polytetrafluorethylen (PTFE) gefertigt. Als besonders geeignet für die vorliegenden Zwecke erwies sich ein Polyethylen hoher Dichte (HDEP), wie der unter dem Handelsnamen "Rigidex". vertriebene Werkstoff. Die beiden Längsaußenseiten der Umfangswand 27 der Gleitkappe 26 bilden zwei einander gegenüberliegende Gleitflächen 34, 35. Falls erwünscht, kann die Außenseite der Stirnwand 28 der Gleitkappe 26 als eine weitere Gleitfläche genutzt werden. An den Gleitflächen 34, 35 sind schräg zur Verschieberichtung verlaufende, erhabene Abstreifrippen 36 (Figur 6) ausgebildet. Die Abstreifrippen 36 sorgen zum einen für eine linienförmige Berührung der Gleitflächen 34, 35 des Gleitbackens 11 mit Gleitflächen 41, 42 (Figur 7) der Führungsbahn 12. Zum anderen bilden sie eine Abstreifeinrichtung für Schmutzpartikel. Die Verwendung solcher Abstreifrippen ist an sich bekannt und in DE 43 36 222 C1 näher erläutert. Die Abstreifrippen 36 und deren Funktion bedürfen daher vorliegend keiner weiteren Erklärung.

Die Führungsbahn 12 weist einen Führungskanal 40 auf, in den der Gleitbacken 11 eintaucht (Figuren 7 bis 9) und entlang dem der Gleitbacken 11 verschoben werden kann.
Dabei stehen die Gleitflächen 34, 35 des Gleitbackens 11 mit Gleitflächen 41, 42 der Führungsbahn 12 in Gleiteingriff (Fig. 7).

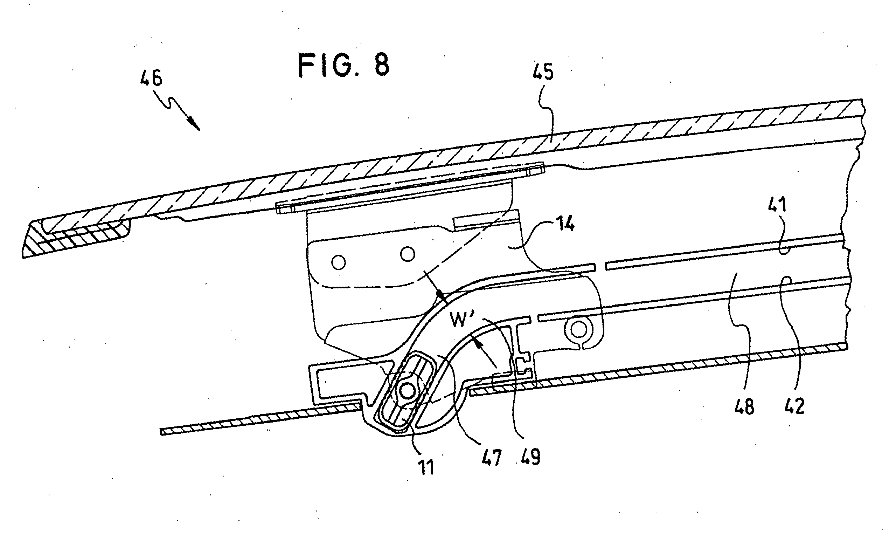

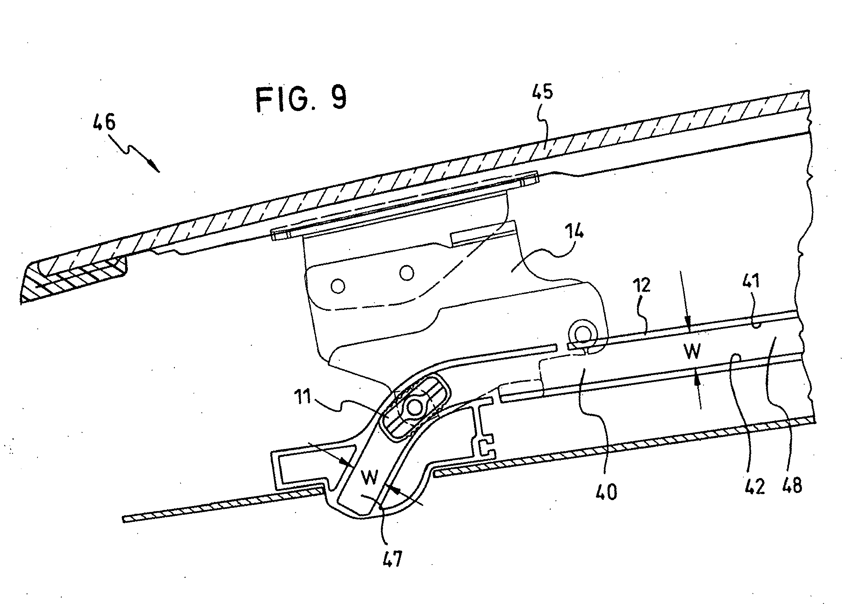

Bei dem in den Figuren 1, 8 und 9 gezeigten Ausführungsbeispiel ist die Gleitbackenführung 10 Teil des vorderen Hub- und Verschiebemechanismus für einen Deckel 45 eines insgesamt mit 46 bezeichneten öffnungsfähigen Fahrzeugdaches. Dabei ist der Deckel 45 mittels einer entsprechenden Mechanik austellbar und oberhalb der Dachfläche verschiebbar, wie dies im einzelnen in DE 100 33 887 C1 beschrieben ist. Die mit dem Tragbolzen 13 des Gleitbackens 11 verbundene Abstützung 14 ist an der Unterseite des Deckels 45 angebracht. Die beispielsweise von mindestens einer Führungsschiene und/oder einer Kulisse gebildete Führungsbahn 12 ist in ihrem vorderen, in den Figuren 8 und 9 linken Bereich nach vorne und unten abgewinkelt, so dass sich zwischen einem vorderen, im wesentlichen geradlinig schräg verlaufenden, parallelen Führungsbahnbereich 47 und einem in Fahrzeuglängsrichtung dahinter liegenden, im wesentlichen geradlinig horizontal verlaufenden, parallelen Führungsbahnbereich 48 ein gebogener Führungsbahnbereich 49 befindet. Der in Fig. 7 angedeutete Kraftfluß F erfolgt von dem Deckel 45 über die Abstützung 14 und den Tragbolzen 13 zu dem relativ festen Trägerteil 15. Über das Trägerteil 15 und den es umgebenden Gleitbackenkörper 20 wird eine Verringerung der Flächenpressung zwischen der Gleitkappe 26 und dem Gleitpartner, das heißt der die Führungsbahn 12 bildenden Führungsschiene oder Kulisse, erreicht.

Für einen auch im Langzeitbetrieb störungsfreien Übergang des Gleitbackens 11 von einem zu einem anderen der Führungsbahnbereiche 47, 48, 49 kommt es auf eine gute Kurvengängigkeit des Gleitbackens 11 in der Führungsbahn 12 an. Zu einer solchen Kurvengängigkeit trägt neben dem zuvor erläuterten Aufbau des Gleitbackens 11 vorliegend auch das Merkmal bei, dass die Führungsbahn 12 in gebogenen Bereichen, wie dem Führungsbahnbereich 49, aufgeweitet ist. Das heißt, die Weite W' (Fig. 8) des gebogenen Führungsbahnbereichs 49 ist größer bemessen als die Weite W der parallelen Führungsbahnbereiche 47 und 48 (Fig. 9). Die Differenz der Weiten W' und W ist dabei vorzugsweise so gewählt, dass der Gleitbacken 11 beim Durchlaufen der Folge von Führungsbahnbereichen 47, 48, 49 nur verschoben und gedreht, nicht aber verformt wird, sofern der Gleitbacken 11 und die Führungsbahn 12 ihre Sollabmessungen haben. In Kurvenbereichen kommt es dann zu einer "Drei-Linien-Auflage" der Gleitflächen 34, 35 des Gleitbackens 11 auf den Gleitflächen 41, 42 der Führungsbahn 12. Die Verformbarkeit des Gleitbackens 11 kann dann in vollem Umfang für einen möglicherweise notwendig werdenden Toleranzausgleich genutzt werden.

Die beschriebene Gleitbackenführung ermöglicht das Tragen von hohen Deckelgewichten.
Der Gleitbacken ist über die Lebensdauer des Systems verschleißarm, und er sorgt zuverlässig für eine Klapperfreiheit des Systems.

### Bezugszeichenliste

- 10: Gleitbackenführung
- 11: Gleitbacken
- 12: Führungsbahn
- 13: Tragbolzen
- 14: Abstützung
- 15: Trägerteil
- 16: Achse von 13
- 17: Nabe
- 18: Flügel
- 20: Gleitbackenkörper
- 21: Umfangswand
- 22: Stirnwand
- 23: Schlitz
- 24: Schlitz
- 26: Gleitkappe
- 27: Umfangswand
- 28: Stirnwand
- 29: Rastnase
- 30: Schulter
- 33: Längsschlitz
- 34: Gleitfläche
- 35: Gleitfläche
- 36: Abstreifrippen
- 40: Führungskanal
- 41: Gleitfläche
- 42: Gleitfläche
- 45: Deckel
- 46: Fahrzeugdach
- 47: paralleler Führungsbahnbereich
- 48: paralleler Führungsbahnbereich
- 49: gebogener Führungsbahnbereich

## Patentansprüche

1. Gleitbackenführung für öffnungsfähige Fahrzeugdächer oder Fahrzeugklappen, mit einer einen Führungskanal (40) aufweisenden Führungsbahn (12) und einem in dem Führungskanal entlang der Führungsbahn verschiebbar geführten Gleitbacken (11), der einen gummielastischen Gleitbackenkörper (20) und eine auf den Gleitbackenkörper aufgesetzte Gleitkappe (26) aufweist, **dadurch gekennzeichnet, dass** in den gummielastischen Gleitbackenkörper (20) ein Trägerteil (15) eingesetzt ist, das eine höhere Festigkeit und Steifigkeit als der Gleitbackenkörper hat und das seinerseits auf einem Tragbolzen (13) drehbar abgestützt ist.

2. Gleitbackenführung nach Anspruch 1, **dadurch gekennzeichnet, dass** das Trägerteil (15) aus Kunststoff besteht.

3. Gleitbackenführung nach Anspruch 2, **dadurch gekennzeichnet, dass** der Tragbolzen (13) aus Metall gefertigt und mit das Trägerteil (15) bildendem Kunststoff umspritzt ist.

4. Gleitbackenführung nach Anspruch 2, **dadurch gekennzeichnet, dass** das Trägerteil (15) auf den Tragbolzen (13) aufgeclipst ist.

5. Gleitbackenführung nach Anspruch 1, **dadurch gekennzeichnet, dass** das Trägerteil (15) aus Metall besteht und auf den Tragbolzen (13) aufgesteckt ist.

6. Gleitbackenführung nach einem der vorhergehenden Ansprüche, **dadurch gekennzeichnet, dass** das Trägerteil (15) eine den Tragbolzen (13) umgreifende Nabe (17) und zwei von gegenüberliegenden Seiten der Nabe im wesentlichen radial abstehende Flügel (18) aufweist.

7. Gleitbackenführung nach einem der vorhergehenden Ansprüche, **dadurch gekennzeichnet, dass** der Gleitbackenkörper (20) im wesentlichen kappenförmig mit einer Umfangswand (21) und einer an die eine Seite der Umfangswand anschließenden Stirnwand (22) ausgebildet ist.

8. Gleitbackenführung nach Anspruch 7, **dadurch gekennzeichnet, dass** der Gleitbackenkörper (20) im Bereich seiner Umfangswand (21) geschlitzt ist.

9. Gleitbackenführung nach einem der vorhergehenden Ansprüche, **dadurch gekennzeichnet, dass** der Gleitbacken (11) im wesentlichen Quaderform hat.

10. Gleitbackenführung nach einem der vorhergehenden Ansprüche, **dadurch gekennzeichnet, dass** der Gleitbacken (11) sowohl in Längsrichtung als auch in Querrichtung spiegelsymmetrisch ausgebildet ist.

11. Gleitbackenführung nach Ansprüchen 8 und 9, **dadurch gekennzeichnet, dass** die Umfangswand (21) des Gleitbackenkörpers (20) in Längsrichtung des Gleitbackens (11) und/oder in Querrichtung des Gleitbackens geschlitzt ist.

12. Gleitbackenführung nach einem der vorhergehenden Ansprüche, **dadurch gekennzeichnet, dass** die Gleitkappe (26) auf das Trägerteil (15) aufgeclipst ist.

13. Gleitbackenführung nach einem der Ansprüche 9 bis 12, **dadurch gekennzeichnet, dass** die Gleitkappe (26) und das Trägerteil (15) in der Längsrichtung des Gleitbackens (11) im wesentlichen spielfrei miteinander verbunden sind.

14. Gleitbackenführung nach Anspruch 13, **dadurch gekennzeichnet, dass** die Gleitkappe (26) eine Umfangswand (27) aufweist, an deren Innenseite das Trägerteil (15) im Bereich der Schmalseiten des Gleitbackens (11) anliegt.

15. Gleitbackenführung nach einem der Ansprüche 9 bis 14, **dadurch gekennzeichnet, dass** die Gleitkappe (26) mit Bezug auf das Trägerteil (15) sowohl in der Querrichtung des Gleitbackens (11) als auch in Drehrichtung um die Achse (16) des Tragbolzens (13) elastisch verstellbar ist.

16. Gleitbackenführung nach Anspruch 15, **dadurch gekennzeichnet, dass** die Gleitkappe (26) eine Umfangswand (27) aufweist, von deren Innenseite das Trägerteil (15) im Bereich der Längsseiten des Gleitbackens (11) in Abstand liegt.

17. Gleitbackenführung nach einem der vorhergehenden Ansprüche, **dadurch gekennzeichnet, dass** der gummielastische Gleitbackenkörper (20) im wesentlichen den gesamten Raum zwischen dem Trägerteil (15) und der Gleitkappe (26) ausfüllt.

18. Gleitbackenführung nach einem der vorhergehenden Ansprüche, **dadurch gekennzeichnet, dass** in die mit Gleitflächen (41, 42) des Führungskanals (40) in Gleiteingriff kommenden Gleitflächen (34, 35) der Gleitkappe (26) Abstreifrippen (36) integriert sind, die schräg zur Verschieberichtung des Gleitbackens (11) verlaufen.

19. Gleitbackenführung nach einem der vorhergehenden Ansprüche, **dadurch gekennzeichnet, dass** der Führungskanal (40) im Bereich von gebogenen Führungsbahnbereichen (49) der Führungsbahn (12) breiter als im Bereich geradliniger Führungsbahnbereiche (47, 48) ausgebildet ist.

20. Gleitbackenführung nach Anspruch 19, **dadurch gekennzeichnet, dass** die Aufweitung des Führungskanals (40) in gebogenen Führungsbahnbereichen (49) so bemessen ist, dass sich die Gleitbacke (11) an die Gleitflächen (41, 42) des Führungskanals auch beim Durchlaufen solcher gebogener Führungsbahnbereiche im wesentlichen verformungsfrei anschmiegt.

## Claims

1. Sliding shoe guide for openable vehicle roofs or covers, having a guide track (12) having a guide channel (40) and a sliding shoe (11) which is guided in the guide channel such that it can be displaced along the guide track and which has a resilient sliding shoe body (20) and a sliding cap (26) placed on the sliding shoe body, **characterized in that** a carrier part (15) which has a higher strength and rigidity than the sliding shoe body and which is in turn supported such that it can rotate on a supporting pin (13) is inserted into the resilient sliding shoe body (20).

2. Sliding shoe guide according to Claim 1, **characterized in that** the carrier part (15) consists of plastic.

3. Sliding shoe guide according to Claim 2, **characterized in that** the supporting pin (13) is fabricated from metal and is encapsulated with the plastic forming the carrier part (15).

4. Sliding shoe guide according to Claim 2, **characterized in that** the carrier part (15) is clipped on to the supporting pin (13).

5. Sliding shoe guide according to Claim 1, **characterized in that** the carrier part (15) consists of metal and is plugged on to the supporting pin (13).

6. Sliding shoe guide according to one of the preceding claims, **characterized in that** the carrier part (15) has a hub (17) engaging around the supporting pin (13) and two wings (18) projecting substantially radially from opposite sides of the hub.

7. Sliding shoe guide according to one of the preceding claims, **characterized in that** the sliding shoe body (20) is substantially cap-like with a circumferential wall (21) and a front wall (22) adjoining one side of the circumferential wall.

8. Sliding shoe guide according to Claim 7, **characterized in that** the sliding shoe body (20) is slit in the region of its circumferential wall (21).

9. Sliding shoe guide according to one of the preceding claims, **characterized in that** the sliding shoe (11) has a substantially parallepipedal shape.

10. Sliding shoe guide according to one of the preceding claims, **characterized in that** the sliding shoe (11) is formed with mirror symmetry both in the longitudinal direction and in the transverse direction.

11. Sliding shoe guide according to Claims 8 and 9, **characterized in that** the circumferential wall (21) of the sliding shoe body (20) is slit in the longitudinal direction of the sliding shoe (11) and/or in the transverse direction of the sliding shoe.

12. Sliding shoe guide according to one of the preceding claims, **characterized in that** the sliding cap (26) is clipped on to the carrier part (15).

13. Sliding shoe guide according to one of Claims 9 to 12, **characterized in that** the sliding cap (26) and the carrier part (15) are connected to each other substantially without play in the longitudinal direction of the sliding shoe (11).

14. Sliding shoe guide according to Claim 13, **characterized in that** the sliding cap (26) has a circumferential wall (27) on the inside of which the carrier part (15) bears in the region of the narrow sides of the sliding shoe (11).

15. Sliding shoe guide according to one of Claims 9 to 14, **characterized in that** the sliding cap (26) can be adjusted resiliently in relation to the carrier part (15) both in the transverse direction of the sliding shoe (11) and in the direction of rotation about the axis (16) of the supporting pin (13).

16. Sliding shoe guide according to Claim 15, **characterized in that** the sliding cap (26) has a circumferential wall (27) from the inside of which the carrier part (15) is located at a distance in the region of the long sides of the sliding shoe (11).

17. Sliding shoe guide according to one of the preceding claims, **characterized in that** the resilient sliding shoe body (20) substantially fills the whole of the space between the carrier part (15) and the sliding cap (26).

18. Sliding shoe guide according to one of the preceding claims, **characterized in that** wiping ribs (36) which run obliquely with respect to the displacement direction of the sliding shoe (11) are integrated into the sliding surfaces (34, 35) of the sliding cap (26) which come into sliding engagement with the sliding surfaces (41, 42) of the guide channel (40).

19. Sliding shoe guide according to one of the preceding claims, **characterized in that** the guide channel (40) is wider in the region of curved guide track regions (49) of the guide track (12) than in the region of straight guide track regions (47, 48).

20. Sliding shoe guide according to Claim 19, **characterized in that** the widening of the guide channel (40) in curved guide track regions (49) is dimensioned such that the sliding shoe (11) rests closely on the sliding surfaces (41, 42) of the guide channel, even when passing through such curved guide track regions.

## Revendications

1. Système de guidage à patin de glissement pour toits ou panneaux ouvrants de véhicules, comprenant une piste de guidage (12) dotée d'un canal de guidage (40), et un patin de glissement (11) qui est guidé à coulissement dans ledit canal de guidage, le long de ladite piste de guidage, et comporte un corps (20) doué de l'élasticité du caoutchouc, et une coiffe de glissement (26) mise en place sur ledit corps du patin de glissement, **caractérisé par le fait que** le corps (20) du patin de glissement, doué de l'élasticité du caoutchouc, renferme une pièce de support (15) qui présente une robustesse et une rigidité supérieures à celles dudit corps du patin de glissement, et est à son tour en appui rotatif sur un tourillon de support (13).

2. Système de guidage à patin de glissement, selon la revendication 1, **caractérisé par le fait que** la pièce de support (15) consiste en une matière plastique.

3. Système de guidage à patin de glissement, selon la revendication 2, **caractérisé par le fait que** le tourillon de support (13) est fabriqué en métal et est enrobé, par injection, d'une matière plastique constituant la pièce de support (15).

4. Système de guidage à patin de glissement, selon la revendication 2, **caractérisé en ce que** la pièce de support (15) est montée par enclenchement ou par clippage sur le tourillon de support (13).

5. Système de guidage à patin de glissement, selon la revendication 21 **caractérisé par le fait que** la pièce de support (15) consiste en du métal et est emboîtée sur le tourillon de support (13).

6. Système de guidage à patin de glissement, selon l'une des revendications précédentes, **caractérisé par le fait que** la pièce de support (15) comprend un moyeu (17) ceinturant le tourillon de support (13), et deux ailes (18) saillant pour l'essentiel radialement au-delà dudit moyeu, à partir de côtés opposés.

7. Système de guidage à patin de glissement, selon l'une des revendications précédentes, **caractérisé par le fait que** le corps (20) du patin de glissement est sensiblement réalisé en forme de capuchon, avec une paroi périphérique (21) et une paroi frontale (22) se rattachant à l'un des côtés de ladite paroi périphérique.

8. Système de guidage à patin de glissement, selon la revendication 7, **caractérisé par le fait que** le corps (20) du patin de glissement est fendu dans la région de sa paroi périphérique (21).

9. Système de guidage à patin de glissement, selon l'une des revendications précédentes, **caractérisé par le fait que** le patin de glissement (11) est, pour l'essentiel, de forme parallélépipédique.

10. Système de guidage à patin de glissement, selon l'une des revendications précédentes, **caractérisé par le fait que** le patin de glissement (11) est de réalisation spéculaire tant dans la direction longitudinale, que dans la direction transversale.

11. Système de guidage à patin de glissement, selon les revendications 8 et 9, **caractérisé par le fait que** la paroi périphérique (21) du corps (20) du patin de glissement est fendue dans la direction longitudinale dudit patin de glissement (11) et/ou dans la direction transversale dudit patin de glissement.

12. Système de guidage à patin de glissement, selon l'une des revendications précédentes, **caractérisé par le fait que** la coiffe de glissement (26) est clipsée sur la pièce de support (15).

13. Système de guidage à patin de glissement, selon l'une des revendications 9 à 12, **caractérisé par le fait que** la coiffe de glissement (26) et la pièce de support (15) sont reliées l'une à l'autre dans la direction longitudinale du patin de glissement (11), pour l'essentiel sans aucun jeu.

14. Système de guidage à patin de glissement, selon la revendication 13, **caractérisé par le fait que** la coiffe de glissement (26) offre une paroi périphérique (27) contre la face intérieure de laquelle la pièce de support (15) est en applique dans la région des petits côtés du patin de glissement (11).

15. Système de guidage à patin de glissement, selon l'une des revendications 9 à 14, **caractérisé par le fait que** la coiffe de glissement (26) peut être ajustée élastiquement vis-à-vis de la pièce de support (15), tant dans la direction transversale du patin de glissement (11), que dans la direction de rotation autour de l'axe (16) du tourillon de support (13).

16. Système de guidage à patin de glissement, selon la revendication 15, **caractérisé par le fait que** la coiffe de glissement (26) offre une paroi périphérique (27) à distance de la face intérieure de laquelle la pièce de support (15) est disposée dans la région des côtés longitudinaux du patin de glissement (11).

17. Système de guidage à patin de glissement, selon l'une des revendications précédentes, **caractérisé par le fait que** le corps (20) du patin de glissement, doué de l'élasticité du caoutchouc, comble pour l'essentiel l'intégralité de l'espace situé entre la pièce de support (15) et la coiffe de glissement (26).

18. Système de guidage à patin de glissement, selon l'une des revendications précédentes, **caractérisé par le fait que** des nervures de raclement (36), intégrées dans les surfaces de glissement (34, 35) de la coiffe de glissement (26) qui sont en prise glissante avec des surfaces de glissement (41, 42) du canal de guidage (40), s'étendent à l'oblique par rapport à la direction du coulissement du patin de glissement (11).

19. Système de guidage à patin de glissement, selon l'une des revendications précédentes, **caractérisé par le fait que** le canal de guidage (40) possède, dans la région de zones arquées (49) de la piste de guidage (12), une réalisation plus large que dans la région de zones rectilignes (47, 48) de ladite piste de guidage.

20. Système de guidage à patin de glissement, selon la revendication 19, **caractérisé par le fait que** l'évasement du canal de guidage (40), dans des zones arquées (49) de la piste de guidage, est dimensionné de façon telle que le patin de glissement (11) épouse la forme des surfaces de glissement (41, 42) dudit canal de guidage, pour l'essentiel sans déformation, également au cours du franchissement de telles zones arquées de la piste de guidage.
